# EUROPÄISCHE PATENTSCHRIFT

(11) **EP 2 707 530 B1**
(45) Veröffentlichungstag und Bekanntmachung des Hinweises auf die Patenterteilung: **29.07.2020**
(21) Anmeldenummer: 12724864.9
(22) Anmeldetag: 18.04.2012
(51) Int. Cl.: B29C 70/46, D04H 3/04, D04H 3/14, D04H 3/002, D04H 3/004, B32B 5/26, D04H 3/153, D04H 3/115, B29B 11/16

(54) **TEXTILE MEHRSCHICHT-VERSTÄRKUNGSSTRUKTUR MIT INTEGRIERTER THERMOPLASTISCHER MATRIX ZUR HERSTELLUNG VON UMFORMBAREN FASERVERBUND-HALBZEUGSTRUKTUREN**
TEXTILE MULTIPLE-LAYER REINFORCING STRUCTURE HAVING AN INTEGRATED THERMOPLASTIC MATRIX FOR PRODUCING FIBRE-COMPOSITE SEMI-FINISHED STRUCTURES WHICH CAN BE SHAPED
STRUCTURE TEXTILE DE RENFORT MULTICOUCHE INTÉGRANT UNE MATRICE THERMOPLASTIQUE POUR LA FABRICATION DE STRUCTURES COMPOSITES SEMI-FINIES FORMABLES ET RENFORCÉES PAR DES FIBRES

(30) Priorität: 12.05.2011 DE 102011101422
(43) Veröffentlichungstag der Anmeldung: 19.03.2014
(73) Patentinhaber: SKL Schwergewebekonfektion Lichtenstein GmbH, 09353 Oberlungwitz (DE)
(72) Erfinder: SCHEIKA, Mike, 47441 Moers (DE); GRÜNDIG, Egon, 08468 Reichenbach (DE); BRUNK, Norbert, 08118 Hartenstein (DE); HELBIG, Frank, 04618 Göpfersdorf (DE); UNGER, Christoph, 09116 Chemnitz (DE); REINHARDT, Michael, 09119 Chemnitz (DE)
(74) Vertreter: Auerbach, Bettina
(86) Internationale Anmeldenummer: PCT/DE2012/000400
(87) Internationale Veröffentlichungsnummer: WO 2012/152242

(56) Entgegenhaltungen:
- EP-A1- 1 987 945
- EP-A2- 0 361 796
- EP-A2- 1 473 132
- WO-A1-99/44810
- WO-A1-2005/033393
- WO-A1-2005/072940
- WO-A2-2005/050409
- DE-A1-102008 063 545
- US-A1- 2008 193 709

## Beschreibung

Die Erfindung betrifft eine textile Mehrschicht-Verstärkungsstruktur mit integrierter thermoplastischer Matrix zur Herstellung von umformbaren Faserverbund-Halbzeugstrukturen bestehend aus mindestens drei unabhängig voneinander gebildeten und nachträglich zusammengefügten Schichtstrukturen, wobei diese Schichtstrukturen Verstärkungsstrukturen und thermoplastisches Fasermaterial aufweisen. Benötigt werden derartige Mehrschicht-Verstärkungsstrukturen insbesondere zur Herstellung von Faserverbund-Halbzeugstrukturen, welche durch nachträgliches Umformen die Fertigung von komplexen mehrdimensional geformten recycelbaren Bauteilen mit hoher Schlagfestigkeit für die Industrie und den Fahrzeugbau ermöglichen.

Es entspricht dem Stand der Technik, mehrachsig textile Verstärkungsstrukturen in thermoplastische Matrizees einzubetten. Dies geschieht, indem textile Halbzeuge aus Verstärkungsfasern wie z.B. Gewebe, Geflechte oder Gelege mit thermoplastischem Matrixmaterial in Form von Fasern, Folien oder Granulat zusammengebracht werden, indem die thermoplastische Komponente aufgeschmolzen und unter Druck in die textile Verstärkungsstruktur gepresst wird. Aufgrund der niedrigen Viskosität thermoplastischer Schmelzen ist aber die bei Faserverbundkunststoffen anzustrebende hohe Imprägnierung der Verstärkungsfasern nach diesen Verfahrensweisen nicht ausreichend realisierbar, was insbesondere auch dazu führt, dass hohe Fasergehalte nicht zu erzielen sind.

Es entspricht auch dem Stand der Technik, die oben genannten Nachteile zu kompensieren, indem zur Herstellung der textilen Halbzeugstrukturen , so genannte Commingling Garne, eingesetzt werden. Sie bestehen aus einer verwirbelten Filamentmischung von thermoplastischen Fasern und Verstärkungsfasern.
Die Herstellung derartiger Fäden ist teuer und die Verstärkungsfilamente liegen aufgrund der verwirbelten Struktur nicht gestreckt vor. Da der Verstärkungsfasergehalt des textilen Halbzeugs durch das Mischungsverhältnis der Commingeling Garne vorgegeben ist, besteht nicht die Möglichkeit innerhalb einer mehrere Achsen aufweisenden Struktur die Verstärkungswirkung zu variieren.
So wird in der EP 0 361 796 A2 ein formbares Verbundmaterial zur Herstellung von Kunststoffen oder ähnlichen Artikeln beschrieben, welches durch ein kontinuierliches Verfahren hergestellt wird, wobei eine Vielzahl von übereinander liegenden Schichten aus nebeneinander liegenden nicht miteinander verwebten Garnen gebildet werden, wobei diese noch vor dem Einbringen der Verstärkungsmaterialmatrix miteinander vernäht werden.

Als Verstärkungsmatrixmaterial wird vorgeschlagen z.B. ein thermoplastisches und duroplastisches Harz, Metall oder Keramik einzusetzen, welches während der nachfolgenden Umformung unter Einwirkung von Druck und Temperatur eine Matrix um das Verstärkungsmaterial bildet.
Da die Garne der einzelnen Schichten nicht miteinander verbunden sind und erst im Verbund mit den anderen Schichten vernäht werden, birgt diese Lösung den Nachteil in sich, dass die gewünschte Verstärkungsqualität und Verstärkungswirkung nicht erreicht wird, da die Garnstruktur durch diese Maßnahme als vernähtes Gelege vor dem Einbringen des Matrixmaterials und dem Formungsprozess sehr instabil ist, sehr viele Kreuzungspunkte der übereinander liegenden Garngelege vorhanden sind und dadurch eine sichere Umhüllung der Verstärkungsfasern mit dem Matrixmaterial nicht garantiert werden kann. Deformationen bei der Weiterverarbeitung können dadurch nicht, sicher vermieden werden.

In der DE 10 2008 063 545 A1 wird ein Multiaxialgelege aus mehreren Lagen von Fasersträngen mit je einer Lage definierten und sich von Lage zu Lage abweichenden Orientierung gebildet, wobei die Faserstränge Verstärkungsfasern umfassen oder aus diesen bestehen und die Faserstränge durch thermoplastische Fäden miteinander verbunden sind. Dem Multiaxialgelege wird anschließend eine Matrixvorstufenkomponente aufgeschmolzen. Da die die Faserstränge verbindenden thermoplastischen Fäden aus dem gleichen Material wie die Matrixvorstufenkomponente bestehen, schmelzen diese im gleichen Zuge auch auf. Der auf diese Weise hergestellte Faserverbundwerkstoff enthält nunmehr keine Fäden mehr.

Die Faserstränge werden von der Matrix eingeschlossen und gehalten. Da jedoch das Aufschmelzen der Matrixvorstufenkomponente erst nach dem Zusammenstellen des Multiaxialgeleges erfolgt, kann das Matrixmaterial nicht sicher zu den Kreuzungspunkten der Faserstränge der einzelnen Lagen gelangen, wodurch eine erheblich Schwächung des Faserverbundwerkstoffes bei mechanischer Beanspruchung erfolgt. Eine vollständige Umhüllung und Einbettung der Faserstränge in die Matrix erfolgt nicht. Die gewünschte hohe Stabilität des Faserverbundwerkstoffes ist damit gefährdet.

Es ist deshalb Aufgabe der Erfindung, die Nachteile des Standes der Technik zu vermeiden und eine textile Verstärkungsstruktur zu schaffen, bei der Verstärkungsfasern innerhalb der textilen Mehrschicht-Verstärkungsstruktur so angeordnet sind, dass diese Schichten zusammen eine mehrachsige Verstärkung ergeben und gleichzeitig eine luftblasenfreie Kunststoffmatrix gebildet wird, welche beim Aufschmelzen zu kurzen Fließwegen führt und somit eine gute Umhüllung der Verstärkungsfasern sicher stellt. Aufgabe der Erfindung ist es ferner, dass diese textilen Verstärkungsstrukturen in einem hohen Maße variiert werden können und dadurch Deformationen bei der Weiterverarbeitung zu umformbaren Faserverbund-Halbzeugstrukturen sicher vermieden werden können.

Die Aufgabe wird erfindungsgemäß durch die Merkmale des Anspruchs 1 gelöst, wobei die vorteilhaften Ausgestaltungen in den Unteransprüchen beschrieben sind.
Danach besteht eine textile Mehrschicht-Verstärkungsstruktur mit integrierter thermoplastischer Matrix zum nachträglichen Herstellen von umformbaren Faserverbund-Halbzeugstrukturen aus mindestens drei unabhängig voneinander gebildeten und nachträglich zusammengefügten Schichtstrukturen, wobei diese Schichtstrukturen Verstärkungsstrukturen und thermoplastisches Fasermaterial aufweisen.
Mindestens eine Schichtstruktur ist dabei als Verstärkungsschicht ausgebildet, wobei jede Verstärkungsschicht unabhängig voneinander und jeweils separat unidirektional ausgerichtete fadenförmige Verstärkungsfaserstrukturen aufweist. Sowohl an der Oberseite als auch an der Unterseite jeder Verstärkungsschicht ist jeweils eine textile Flächenstrukturschicht aus thermoplastischem Fasermaterial angeordnet und trennt somit die Verstärkungsschichten voneinander.

Alle übereinander angeordneten Schichten sind vor einer Druck- und/oder Temperaturbeaufschlagung mittels Fäden aus thermoplastischem Material miteinander textiltechnisch zueinander fixiert und/oder miteinander verbunden.

Die in den Verstärkungsschichten unidirektional angeordneten Verstärkungsfasern bestehen vorteilhafter Weise aus 100% fadenförmigen Verstärkungsfasermaterial, wie Rovings aus Glas- oder Kohlenstofffasern bestehen. Die Verstärkungsfasern tragen zusätzlich zur Vermeidung von Deformationen bei der Weiterverarbeitung der textilen Mehrschicht-Verstärkungsstruktur bei.

Es besteht jedoch die Möglichkeit, dass die unidirektional angeordneten Verstärkungsfasern aus fadenförmigem Verstärkungsfasermaterial und Fäden aus thermoplastischem Fasermaterial bestehen. Dadurch kommt es beim anschließendem Temperaturbeaufschlagen zur Schmelze des thermoplastischen Fadenmaterials und somit zur zusätzlichen Einbettung auch des Verbundfasermaterials in die entstehende thermoplastische Matrix. Es entsteht ein komplexer und vollflächiger Verbund aus allen in den einzelnen Schichten enthaltenen Verstärkungsfasern und der thermoplastischen Materialmatrix. Diese Wirkung wird auch erreicht, wenn die unidirektional angeordneten Verstärkungsfasern aus Fäden bestehen, welche aus einer Mischung von Verstärkungsfasern und thermoplastischen Fasern gebildet sind. Unterstützend kann dieser vollflächige Verbund weiterhin herbeigeführt werden, wenn auch die textile Flächenstrukturschicht aus
einem Gemisch aus Verstärkungsfasern und thermoplastischem Fasermaterial gebildet ist.

Auf Grund der unidirektionalen Ausrichtung der Verstärkungsfasern in den Verstärkungsschichten kann auf eine gezielte Ausrichtung der Verstärkungsfaseranteile in der textilen Flächenstrukturschicht verzichtet werden.

Zur Ausbildung von umformbaren Faserverbund-Halbzeugstrukturen können mehrere dieser textilen Mehrschicht-Verstärkungsstrukturen zu weiteren komplexen Schichtstrukturen übereinander gestapelt werden, um durch Umformen weiterverarbeitet zu werden, wobei der Aufbau sowohl aus gleichen Mehrschicht-Verbundstrukturen als auch aus unterschiedlich gestalteten und unterschiedlich starken Mehrschicht-Verbundstrukturen bestehen kann. Innerhalb der textile Mehrschicht-Verstärkungsstruktur mit integrierter thermoplastischer Matrix besteht die Möglichkeit, die Ausrichtung der fadenförmigen Verstärkungsfaserstrukturen in Bezug auf die Fertigungsrichtung innerhalb einer Lage von 0°oder 90° vorzunehmen und /oder in weiteren Lagen bis zu +/- 60°, vorzugsweise 45° vorzunehmen, um eine stabile Verstärkungsmatrix zu schaffen.

Um Schwachstellen innerhalb der Verstärkungsstruktur zu vermeiden sollte vorteilhafter Weise die Anordnung der textilen Verstärkungsschichten innerhalb der Mehrschichtverstärkungsstruktur ohne direktem Kontakt der Verstärkungsstrukturen verschiedener Verstärkungsschichten erfolgen, da an derartigen Verstärkungsfaser-Berührungspunkten die thermoplastische Matrix nicht vollflächige die Verstärkungsfaser einhüllen und damit in diese Matrix integrieren kann.

In allen Schichten der textilen Mehrschicht-Verstärkungsstruktur können zusätzlich lokal platzierte Verstärkungsstrukturen angeordnet sein, um eine partiell erhöhte Verstärkung der textilen Verstärkungsstruktur zu erreichen.

Auf Grund des Schichtaufbaus der textile Mehrschicht-Verstärkungsstruktur vor der Temperatur- und Druckbeaufschlagung und der zwischen den Verstärkungsstrukturen angeordneten textilen Flächenstrukturen ist es möglich, dass in einzelne oder zwischen einzelnen Schichten innerhalb der Mehrschichtverstärkungsstruktur Funktionselemente, wie Sensoren, Stromkabel, elektrische Kontaktelemente oder metallische Verbindungselemente, wie Stifte, Ösen, Haken, angeordnet werden können. Diese werden nach der Temperaturbeaufschlagung sowohl in die Verstärkungsstruktur als auch in die thermoplastische Matrixstruktur integriert und fest eingebettet.

Textile unidirektionale Mehrschicht-Verstärkungsstruktur mit integrierter thermoplastischer Matrix zur Herstellung von umformbaren Faserverbund-Kunststoffhalbzeugen hat den Vorteil, dass diese Struktur aus mehreren, unabhängig voneinander mehrachsig angeordneten unidirektionalen Verstärkungsschichten besteht, wobei diese einzelnen Schichten sowohl aus 100% Verstärkungsfasern als auch aus einer Mischung von Verstärkungsfasern und Fäden aus thermoplastischem Matrixmaterial gebildet sein können und unter, zwischen sowie auf jeder dieser Schichten weitere Schichten aus textilen Flächengebilden, bestehend aus thermoplastischem Fasermaterial oder einer Mischung aus Verstärkungsfasern und thermoplastischen Fasern platziert sein können, wobei der Zusammenhalt aller Schichten vor der Temperatur- und Druckbeaufschlagung durch einen thermoplastischen Verbindungsfaden gewährleistet wird. Dabei werden kurze Fließweg der thermoplastischen Schmelze realisiert, weil die Verstärkungsfasern in unmittelbarem Kontakt mit dem thermoplastischen Matrixmaterial stehen, was wiederum dazu führt, dass eine luftblasenfreie thermoplastische Matrix entsteht, ohne dass hohe Verarbeitungsdrücke notwendig sind.
Dadurch werden Deformationen der textilen Mehrschicht-Verstärkungsstruktur bei der Weiterverarbeitung zu umformbaren Faserverbund-Halbzeugen sicher vermieden, wobei eine hohe Variabilität in der Gestaltung der notwendigen textilen Mehrschicht-Verstärkungsstrukturen besteht ohne einen hohen technischen Aufwand bei der kontinuierlich Herstellung betreiben zu müssen.

Die Erfindung soll nachstehend an einem Ausführungsbeispiel näher erläutert werden.

In der beigefügten Zeichnung zeigen:
- Fig. 1:: eine schematische Darstellung einer textilen Mehrschicht-Verstärkungsstruktur vor dem Beaufschlagen mit niedrigem Druck und/oder Temperatur bestehen aus zwei Verstärkungsschichten (2 a und 2b) und drei textilen Flächenstrukturschichten (1) und
- Fig. 2: eine schematische Darstellung einer textilen Mehrschicht-Verstärkungsstruktur vor dem Beaufschlagen mit niedrigem Druck und/oder Temperatur bestehen aus vier Verstärkungsschichten (2 a - 2d) und fünf textilen Flächenstrukturschichten (1).

### Ausführungsbeispiel 1:

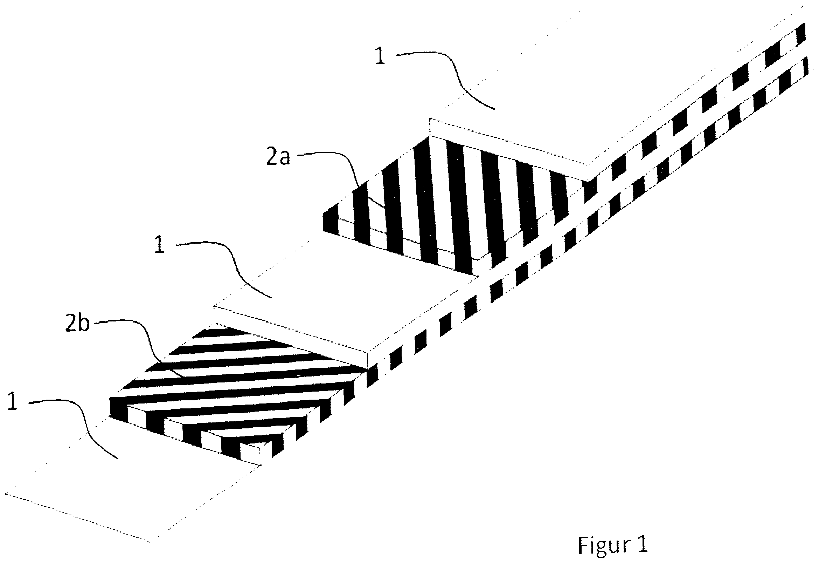

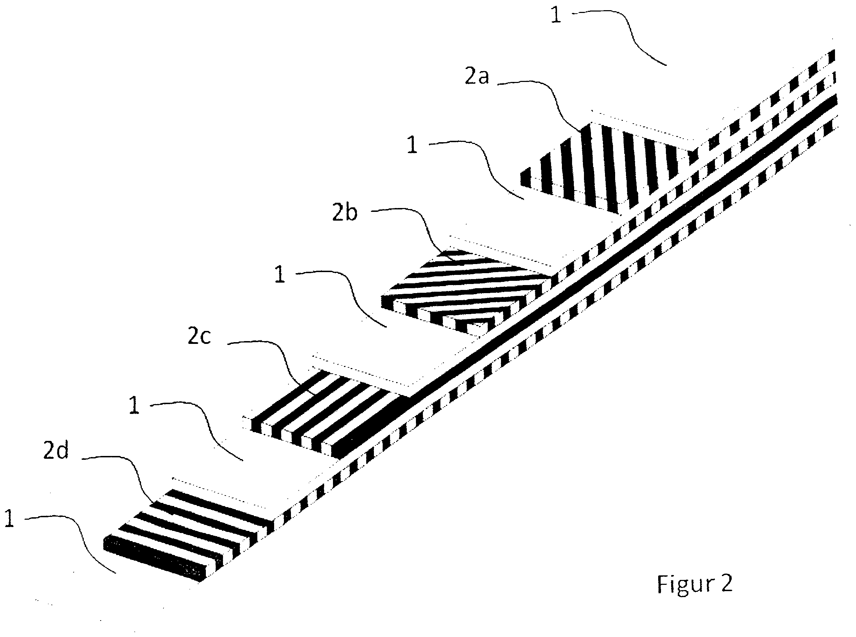

Gemäß der Figur 1 besteht eine textilen Mehrschicht-Verstärkungsstruktur mit integrierter thermoplastischer Matrix aus mehreren Schichtstrukturen, wovon die Schichtstruktur 2a, 2b als Verstärkungsschicht ausgebildet ist. Dabei ist die Verstärkungsschicht 2a derart aufgebaut, dass alle als fadenförmiges Fasermaterial in diese Schicht angeordneten Verstärkungsfasern + 45°, bezogen auf die Fertigungsrichtung, unidirektional ausgerichtet angeordnet sind. Diese unidirektional angeordneten Verstärkungsfasern bestehen aus 100% fadenförmigen Verstärkungsfasermaterial.
In einer weiteren Verstärkungsschicht 2b sind alle als fadenförmiges Fasermaterial in diese Schicht angeordneten Verstärkungsfasern - 45°, bezogen Auf die Fertigungsrichtung, unidirektional ausgerichtet. Diese Verstärkungsschichten sind jeweils beidseitig von einer textilen Flächenstrukturschicht 1 aus thermoplastischem Fasermaterial abgedeckt. Diese Anordnung hat den Vorteil, dass die Verstärkungsfasern innerhalb der textilen Mehrschicht-Verstärkungsstruktur definiert in verschiedenen Richtungen angeordnet sind und so die notwendige Kraftaufnahme durch die Verstärkungsfasern für den beabsichtigten Einsatzzweck definiert erfolgen kann. Zum anderen hat es den Vorteil, dass durch die separate unidirektionale Anordnung der Verstärkungsfasern je Schicht es zu keinen Überschneidungspunkten der Verstärkungsfasern in den Verstärkungsfaserschichten 2a - 2n kommt. Dies wird unterstützt, dass die textilen Flächenstrukturschichten zumindest zwischen den Verstärkungsfaserschichten angeordnet sind und somit ein Kontakt der Verstärkungsfasern der einzelnen Schichten vermieden wird. Alle übereinander angeordneten Schichten 1, 2b, 1 2a, 1 sind mittels thermoplastischen Fadenmaterials und mittels miteinander verbunden bevor ein fester Verbund dieser einzelnen Schichten durch nachträgliche Druck- und/oder Temperaturbeaufschlagung erreicht ist. Schematisch nicht dargestellt ist die Möglichkeit, dass einzelne Schichten zusätzlich mit lokal aufgebrachten Verstärkungsstrukturen versehen sind. Mit dieser technischen Lösung des Aufbaus einer textilen Mehrschicht-Verstärkungsstruktur wurde erreicht, dass bei der thermoplastischen Schmelze kurze Fließwege geschaffen sind, da jede Verstärkungsfaser im unmittelbaren Kontakt mit dem thermoplastischen Matrixmaterial der textilen Flächenstrukturschicht steht. Dadurch wird auch erreicht, dass die Luftblasenbildung während der Temperaturbeaufschlagung ausgeschlossen werden kann. Die einzelnen Schichten 1 und 2 a - 2n können von ihrer Stärke variabel ausgebildet werden, da deren Anordnung mehrfach übereinander erfolgen kann, wie dies aus der Figur 2 ersichtlich ist.

Es besteht auch die Möglichkeit, dass die Verstärkungsfasern bereits mit einem Anteil an thermoplastischem Fasermaterial ausgebildet sind oder dass in der textilen Faserverbundschicht auch Verstärkungsfasermaterial integriert vorliegt. Die variable Gestaltung der einzelnen Schichten als auch deren Anordnungsvielfalt innerhalb der textile Mehrschicht-Verstärkungsstruktur lassen es auch zu, dass in einzelnen Schichten oder auch zwischen den einzelnen Schichten zusätzlich Funktionselemente, beispielsweise Sensoren, Kabel, Kontaktelemente oder Verbindungselemente, wie Stifte, Ösen, Haken oder dgl., angeordnet und integriert werden können.

Auf Grund der separat herstellbaren einzelnen Schichten der Verbundstruktur kann diese textile Mehrschicht-Verstärkungsstruktur kontinuierlich mit technischen Mitteln aus dem vorliegenden Stand der Technik gefertigt werden. Diese vorliegende textile Mehrschicht-Verstärkungsstruktur aus mehreren unabhängig voneinander gebildeten und nachträglich zusammengefügten Schichtstrukturen, kann nunmehr zur Herstellung von noch komplexeren umformbaren Faserverbund-Halbzeugstrukturen eingesetzt und mehrfach übereinander angeordnet einem Umformprozess zugeführt werden.

## Patentansprüche

1. Textile Mehrschicht-Verstärkungsstruktur mit integrierter thermoplastischer Matrix zur Herstellung von umformbaren Faserverbund-Halbzeugstrukturen bestehend aus mindestens drei unabhängig voneinander gebildeten und nachträglich zusammengefügten Schichtstrukturen, wobei diese Schichtstrukturen Verstärkungsstrukturen und thermoplastisches Fasermaterial aufweisen und jede Verstärkungsschicht jeweils unidirektional ausgerichtete fadenförmige Verstärkungsfaserstrukturen aufweist und alle übereinander angeordneten Schichten vor einer Druck- und/oder Temperaturbeaufschlagung miteinander textiltechnisch verbunden angeordnet sind,
**dadurch gekennzeichnet, dass** mindestens eine Schichtstruktur als Verstärkungsschicht ausgebildet ist,
**dass** jede Verstärkungsschicht jeweils an beiden Seiten von einer textilen Flächenstrukturschicht aus thermoplastischem Fasermaterial abgedeckt ist und
**dass** *als textiltechnischer Verbund aller übereinander angeordneten Schichten ein thermoplastisches Fadenmaterial angeordnet ist.*

2. Textile Mehrschicht-Verstärkungsstruktur mit integrierter thermoplastischer Matrix nach dem Anspruch 1, **dadurch gekennzeichnet, dass** die unidirektional angeordneten Verstärkungsfasern aus 100% fadenförmigen Verstärkungsfasermaterial bestehen.

3. Textile Mehrschicht-Verstärkungsstruktur mit integrierter thermoplastischer Matrix nach einem der Ansprüche 1 und 2, **dadurch gekennzeichnet, dass** die unidirektional angeordneten Verstärkungsfasern aus fadenförmigen Verstärkungsfasermaterial und Fäden aus thermoplastischem Fasermaterial bestehen.

4. Textile Mehrschicht-Verstärkungsstruktur mit integrierter thermoplastischer Matrix nach einem der Ansprüche 1 und 2, **dadurch gekennzeichnet, dass** die unidirektional angeordneten Verstärkungsfasern aus Fäden, die aus einer Mischung von Verstärkungsfasern und thermoplastischen Fasern gebildet sind, bestehen.

5. Textile Mehrschicht-Verstärkungsstruktur mit integrierter thermoplastischer Matrix nach einem der Ansprüche 1 bis 4, **dadurch gekennzeichnet, dass** die textile Flächenstruktur der Verstärkungsschicht aus einem Gemisch aus Verstärkungsfasern und thermoplastischem Fasermaterial gebildet ist.

6. Textile Mehrschicht-Verstärkungsstruktur mit integrierter thermoplastischer Matrix nach einem der Ansprüche 1 bis 5, **dadurch gekennzeichnet, dass** die Ausrichtung der fadenförmigen Verstärkungsfaserstrukturen in Bezug auf die Fertigungsrichtung 0° bis 90° und/oder in einer weiteren Lage 0° bis zu +/- 60°, vorzugsweise 45° erfolgt.

7. Textile Mehrschicht-Verstärkungsstruktur mit integrierter thermoplastischer Matrix nach einem der Ansprüche 1 bis 6, **dadurch gekennzeichnet, dass die** Anordnung der textilen Verstärkungsschichten innerhalb der Mehrschichtverstärkungsstruktur ohne direktem Kontakt der Verstärkungsstrukturen verschiedener Verstärkungsschichten erfolgt.

8. Textile Mehrschicht-Verstärkungsstruktur mit integrierter thermoplastischer Matrix nach einem der Ansprüche 1 bis 7, **dadurch gekennzeichnet, dass** einzelne Schichten zusätzlich mit lokal aufgebrachten Verstärkungsstrukturen versehen sind.

9. Textile Mehrschicht-Verstärkungsstruktur mit integrierter thermoplastischer Matrix nach einem der Ansprüche 1 bis 8, **dadurch gekennzeichnet, dass** in einzelne Schichten innerhalb der Mehrschichtverstärkungsstruktur Funktionselemente, wie Sensoren, Stromkabel, elektrische Kontaktelemente oder metallische Verbindungselemente, wie Stifte, Oesen, Haken, angeordnet sind.

## Claims

1. Textile multi-layer reinforcing structure having an integrated thermoplastic matrix for producing shapeable fiber-composite semifinished structures consisting of at least three independently formed and subsequently joined layer structures, these layer structures having reinforcing structures and thermoplastic fiber material, and each reinforcing layer having unidirectionally aligned filament-shaped reinforcing fiber structures, and all layers which are arranged one above the other being arranged so as to be interconnected in textile terms prior to the application of pressure and/or temperature, **characterized in that** at least one layer structure is designed as a reinforcing layer, **in that** each reinforcing layer is covered on both sides by a textile surface structure layer made of thermoplastic fiber material, and **in that** a thermoplastic filament material is arranged as a textile composite of all the layers which are arranged one above the other.

2. Textile multi-layer reinforcing structure having an integrated thermoplastic matrix according to claim 1, **characterized in that** the unidirectionally arranged reinforcing fibers consist of 100% filament-shaped reinforcing fiber material.

3. Textile multi-layer reinforcing structure having an integrated thermoplastic matrix according to either of claims 1 and 2, **characterized in that** the unidirectionally arranged reinforcing fibers consist of filament-shaped reinforcing fiber material and the filaments consist of thermoplastic fiber material.

4. Textile multi-layer reinforcing structure having an integrated thermoplastic matrix according to either of claims 1 and 2, **characterized in that** the unidirectionally arranged reinforcing fibers consist of filaments which are formed from a mixture of reinforcing fibers and thermoplastic fibers.

5. Textile multi-layer reinforcing structure having an integrated thermoplastic matrix according to any of claims 1 to 4, **characterized in that** the textile surface structure of the reinforcing layer is formed from a mixture of reinforcing fibers and thermoplastic fiber material.

6. Textile multi-layer reinforcing structure having an integrated thermoplastic matrix according to any of claims 1 to 5, **characterized in that** the filament-shaped reinforcing fiber structures are aligned with respect to the production direction at 0° to 90° and/or in a further layer at 0° to +/- 60°, preferably 45°.

7. Textile multi-layer reinforcing structure having an integrated thermoplastic matrix according to any of claims 1 to 6, **characterized in that** the textile reinforcing layers are arranged within the multi-layer reinforcing structure without the reinforcing structures of different reinforcing layers having direct contact.

8. Textile multi-layer reinforcing structure having an integrated thermoplastic matrix according to any of claims 1 to 7, **characterized in that** individual layers are additionally provided with locally applied reinforcing structures.

9. Textile multi-layer reinforcing structure having an integrated thermoplastic matrix according to any of claims 1 to 8, **characterized in that** functional elements, such as sensors, power cables, electrical contact elements, or metal connection elements, such as pins, eyelets, hooks, are arranged in individual layers within the multi-layer reinforcing structure.

## Revendications

1. Structure textile de renforcement multicouche intégrant une matrice thermoplastique pour la production de structures façonnables de demi-produits composites renforcés par des fibres, constituée d'au moins trois structures stratifiées formées indépendamment les unes des autres et assemblées ultérieurement, ces structures stratifiées présentant des structures de renforcement et un matériau fibreux thermoplastique, et chaque couche de renforcemert présentant respectivement des structures fibreuses de renforcement filiformes orientées unidirectionnellement, et toutes les couches agencées les unes au-dessus des autres étant agencées de façon à être reliées entre alles par une technique textile avant d'être soumises à l'effet d'une pression et/ou d'une température.
**caractérisée en ce qu'**au moins une structure stratifiée est conçue sous forme de couche de renforcement
**que** chaque couche de renforcement est recouverte respectivement des deux côtés par une couche de structure textile plane en matériau fibreux thermoplastique
et
**qu**'*un matériau de fil thermoplastique est agencé en tant que composite de technique textile de toutes les couches agencées les unes au-dessus des autres.*

2. Structure textile de renforcement multicouche intégrant une matrice thermoplastique selon la revendication 1, **caractérisée en ce que** les fibres de renforcement agencées unidirectionnellement sont constituées à 100 % d'un matériau fibreux de renforcement filiforme.

3. Structure textile de renforcement multicouche intégrant une matrice thermoplastique selon l'une des revendications 1 et 2, **caractérisée en ce que** les fibres de renforcement agencées unidirectionnellement sont constituées d'un matériau fibreux de renforcement filiforme et de fils en matériau fibreux thermoplastique.

4. Structure textile de renforcement multicouche intégrant une matrice thermoplastique selon l'une des revendications 1 et 2, **caractérisée en ce que** les fibres de renforcement agencées unidirectionnellement sont constituées de fils qui sont formés d'un mélange de fibres de renforcement et de fibres thermoplastiques.

5. Structure textile de renforcement multicouche intégrant une matrice thermoplastique selon l'une des revendications 1 à 4, **caractérisée en ce que** la structure textile plane de la couche de renforcement est formée d'un mélange de fibres de renforcement et d'un matériau fibreux thermoplastique.

6. Structure textile de renforcement multicouche intégrant une matrice thermoplastique selon l'une des revendications 1 à 5, **caractérisée en ce que** l'orientation des structures fibreuses de renforcement filiformes par rapport au sens de fabrication est de 0° ä 90° et/ou, dans une position supplémentaire, de 0° à +/- 60°, de préférence de 45°.

7. Structure textile de renforcement multicouche intégrant une matrice thermoplastique selon l'une des revendications 1 ä 6, **caracterisée en ce que** l'agencement des couches textiles de renforcement à l'intérieur de la structure de renforcement multicouche s'effectue sans contact direct des structures de renforcement de différentes couches de renforcement

8. Structure textile de renforcement multicouche intégrant une matrice thermoplastique selon l'une des revendications 1 à 7, **caractérisée en ce que** les couches individuelles sont en outre pourvues de structures de renforcement appliquées localement.

9. Structure textile de renforcement multicouche intégrant une matrice thermoplastique selon l'une des revendications 1 à 8, **caractérisée en ce que** des éléments fonctionnels tels que des capteurs, des câbles d'alimentation et des éléments de contact électriques, ou des éléments de liaison metalliques tels que des broches, des oeillets et des crochets, sont agencés dans les couches individuelles à l'intérieur de la structure de renforcement multicouche.
